# EUROPEAN PATENT SPECIFICATION

(11) **EP 4 374 981 B1**
(45) Date of publication and mention of the grant of the patent: **27.08.2025**
(21) Application number: 23211883.6
(22) Date of filing: 24.11.2023
(51) Int. Cl.: B09B 3/45, B29C 51/00, B29C 51/08, B29C 51/10, D21J 3/00, B65D 65/46, B29C 43/00, B09B 101/70, B29K 105/26

(54) **METHOD OF PRODUCING CONTAINERS OR PACKAGING**
VERFAHREN ZUR HERSTELLUNG VON BEHÄLTERN ODER VERPACKUNGEN
PROCÉDÉ DE PRODUCTION DE RÉCIPIENTS OU D'EMBALLAGES

(30) Priority: 25.11.2022 IT 202200024378
(43) Date of publication of application: 29.05.2024
(73) Proprietor: Università degli Studi di Foggia, 71122 Foggia (IT)
(72) Inventor: DE PILLI, Teresa, 71121 Foggia (IT); LOPRIORE, Giuseppe, 71122 Foggia (IT); ALESSANDRINO, Ofelia, 71010 San Paolo di Civitate (Foggia) (IT); BAIANO, Antonietta, 71122 Foggia (IT)
(74) Representative: Rimini, Rebecca

(56) References cited:
- EP-B1- 3 015 489
- GB-A- 2 449 507

## Description

The present invention refers to a newly designed environmentally sustainable production process that uses by-products and waste from agricultural activities and food industries which can be reused by means of environmentally friendly technologies (referred to as SP.A.R.T.A.CO.) to make biodegradable and compostable objects, tools, containers or packaging.

Climate change and air pollution are linked to each other and generate each other, causing unsustainable effects on ecological systems and human health. Exposure to pollution and toxic chemicals causes at least nine million premature deaths every year, which is twice the number caused by the Covid-19 pandemic during its first 18 months. Efforts to keep global warming within 1.5°C are insufficient to mitigate the effects of climate change affecting billions of people throughout the world. Not only that, exceeding this level of warming could cause further serious impacts, some of which would be irreversible. The weakness of Europe's agri-food systems, significantly and dramatically worsened by the effects of climate change, the COVID-19 pandemic and the war in Ukraine, requires careful analysis in order to identify actions that can ensure long-term environmental, social and economic sustainability.

In particular, the war in Ukraine is highlighting the vulnerability of Europe and, in particular, Italy, as to the dependence on imports of raw materials and energy, pointing out the importance of resolutely implementing all the objectives necessary for a profound rethink of agri-food systems, through the use of agricultural practices and industrial transformation processes capable of ensuring long-term food security and overall sustainability of agri-food systems.

The overall response to these upheavals must certainly include extraordinary measures that will immediately reduce the dependence of Europe and, in particular, Italy, on imports and the use of fossil fuels, as well as reduce pollution and extreme weather phenomena they generate.

There are many alternative energy sources to fossil fuels (oil and methane gas), including biogas produced by bacterial fermentation of biomass, i.e., residues of organic material of plant or animal origin. Biogas is suitable for various uses that aim to obtain energy in a clean way: electrical and thermal energy, and clean fuel (biomethane). There are many advantages: a clean and renewable energy source (it allows energy to be obtained from waste products), it contributes to promoting the transition from a linear to a circular economy; it reduces carbon dioxide (CO₂) emissions into the atmosphere; it reduces methane emissions that occur during extraction and transport of natural gas.

However, shortcomings exhibited by this alternative energy include the need for large spaces for the installation of the power plants (the minimum surface area is 300 hectares) and the need to identify and select the waste material to be processed since some waste or by-products are not suitable for use.

Processes for the production of food packaging or packaging articles that employ biopolymers are known and described, for example, in WO2008035082, IT1392800B1, IT1399500B1, WO2019190324, and IT1424013, but they usually entail high costs, and/or involve chemical or extraction and/or purification treatments that generate effluents with significant environmental impact.

Patent application IN201941054360 describes a process of producing a biodegradable and compostable material from dairy industry waste and banana peels. The process described therein has limitations due to the use of only two types of food industry waste, namely ghee butter residue and banana peels, which are specific to the geographical production area in which they were produced, namely India. The oligosaccharide extraction method involves a chemical treatment with acetic acid which can generate effluents with a high environmental impact. Furthermore, this method does not report the actual industrial applications of the material obtained, not even at a potential level.

EP2756034 discloses a production process which employs an admixture of carbohydrate-containing agricultural waste with a mixture of synthetic thermoplastic polymers.

Patent application EP2510046 discloses a method for the production of a thermoformable composite, which comprises a step of cross-linking polyhydroxyalkanoate polymers (PHA) with polylactic acid (PLA).

EP3015489 relates to a biodegradable and compostable material produced from the integral use of food industry waste through the extrusion-cooking technology, which requires a starting material with a very small particle size, between 200 and 300 microns, as well as the addition of starchy flours. Therefore, the production process disclosed in EP3015489 finds limited applications as it is not suitable for processing agricultural waste with a coarse particle size (> 300 microns) and/or characterized by a high content of fiber and raw cellulose, such as tree crop pruning residues.

There is therefore a need to provide a method, which allows the diversification and expansion of the use of by-products and agricultural and/or industrial waste as starting materials for the production of biodegradable and compostable articles and does not require further enzymatic or chemical extraction steps, nor purification steps that typically involve the use of large volumes of water.

There is also a need to provide a sustainable production process with a very low impact on the environment, which leads to a significant plant simplification and a cyclical and continuous use of renewable sources, without the generation of high-impact waste and effluents.

In view of the above objects, the object of the invention is a method of producing a biodegradable and compostable container or packaging article as defined in the attached independent claims.

Further features and advantages of the invention are identified in the attached dependent claims and illustrated in detail in the following description.

The attached independent and dependent claims form an integral part of the present specification.

As will be apparent from the following detailed description, the present invention provides a method, referred to as SP.A.R.T.A.CO., which, by making integral use of organic material from agricultural activities and food industries, enables the production of container or packaging articles which are fully biodegradable and compostable, while not leading to the generation of residues and/or the release of additional carbon dioxide, thereby ensuring a cyclical and continuous use of renewable sources and a real circular economy.

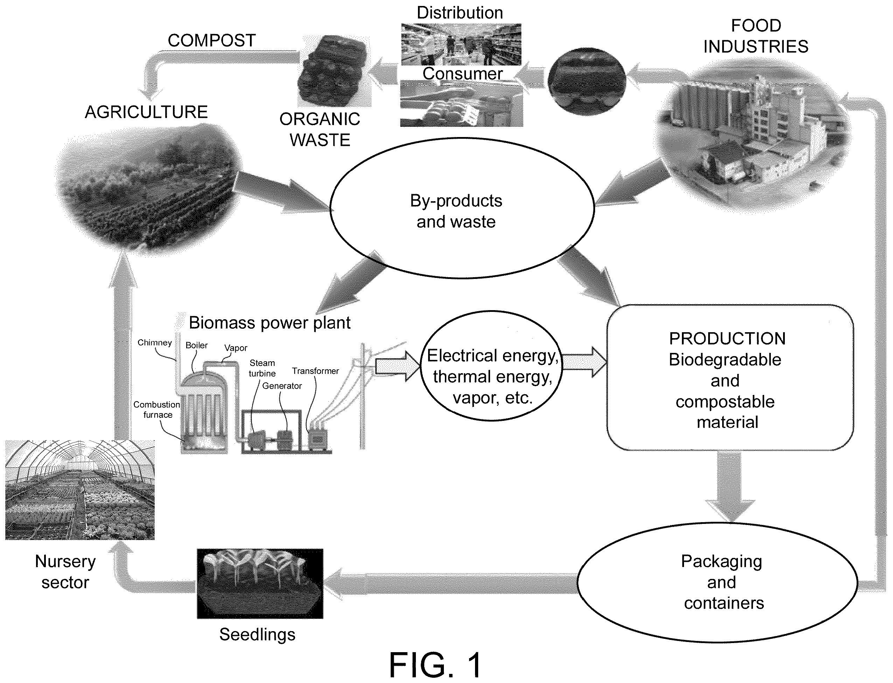

Specifically, Figure 1 shows an application example relating to the implementation of the new zero-impact eco-sustainable ("green") production process within a biomass power plant. This figure shows the circularity of the transformation process, which involves the use of by-products and waste from agricultural activities and food industries, which are used both by the biomass power plant and by the production process, allowing the manufacture of biodegradable and compostable containers and packaging. Electrical and thermal energy sources are also "green" as they are supplied by the same biomass power plant. The production process involves the optional drying of waste and by-products having a moisture content higher than 15%, and the subsequent pulverization using a blade cutter for coarse material which has a particle size greater than 600 microns. This is followed by a step of mixing with a plasticizer ingredient and by treatment with vapor recovered from the previous drying step through a recycling system. The material thus obtained is thermoformed using an innovative system which will be illustrated below. The products thus obtained can be reused in the agricultural sector or in the food industry. Depending on the intended use, the shape and size of the objects can be obtained by simply changing the mold and counter-mold in the forming system. After their use by operators of the agricultural, food industry or distribution sectors, or by the consumer himself/herself, these containers and packaging will be disposed of as compostable organic waste. Therefore, they can be used again as compost and organic fertilizer for agricultural land, thus returning to the production cycle in a cyclical and continuous manner. The diagram shown in Figure 1 points out the absence of effluents or waste with a high environmental impact. In addition, this production process involves little or no emission of carbon dioxide into the external environment. Therefore, the patent proposal fully respects the principles of the circular economy.

According to the present invention, the production method only involves the integral use of agricultural and/or food by-products and waste as the starting material.

Within the scope of the present disclosure, the term "by-product" refers to the residues from a production cycle, which can be managed as goods and not as waste, provided that they meet each of the conditions laid down by law (article 184-bis of Legislative Decree 152/2006), as indicated below:
a) the substance or object arises from a production process of which it forms an integral part and whose primary purpose is not the production of that substance or object;
b) the use of the substance or object in the same or a subsequent production or use process by the producer or a third party is certain;
c) the substance or object can be used directly without any further processing other than normal industrial practice;
d) further use is lawful, i.e. the substance or object fulfils, for the specific use, all relevant product, health and environmental protection requirements and will not lead to overall adverse impacts on the environment or human health.

If only one of the above conditions is not met, the waste from production is subject to waste regulations and therefore disposed of as such.

The term "biodegradable article", as used herein, refers to a product capable of decomposing into the chemical elements that compose it through the action of biological agents such as bacteria, plants, animals and/or physical agents, such as the sun and water, under natural environmental conditions. According to the European standard UNI EN 13432:2002, a product, in particular a packaging, can be defined as biodegradable if it disintegrates into its basic components by at least 90% of its initial weight, over a period of 6 months (180 days) in an aerobic environment.

The term "compostable article", as used herein, refers to a product capable of being transformed into compost organic matter through a biological, natural or industrial decomposition process, under controlled conditions, within a period of 3 months, without exerting any adverse effect on the environment. As is well known, compost is a biologically stable, inert and odorless organic product consisting mainly of humus, active microorganisms and trace elements, which is particularly suitable for use as a fertilizer. In other words, a compostable article is capable of decomposing during an industrial composting process without creating obstacles in the treatment plant and without adversely affecting the quality of the final compost obtained.

Some examples of by-products from agricultural activity can be identified in organic material that cannot be used for the sale of the "fresh" product or for processing in food industries for the production of food intended for human consumption. Non-limiting examples of by-products from agricultural activity include leguminous plants, graminaceous plants, and green manure cruciferous plants (a practice whereby plants are planted at their maximum development), such as, for example, broad beans, clover, vetch, sainfoin, lupin, soybean, and sweet clover.

The waste from agricultural activity that can be used in the method according to the invention includes, but is not limited to, the residual material from the pruning of tree plants such as grapevines, olive trees, and fruit trees.

Exemplary by-products in the food processing and beverage production industry are flours from the milling industry intended for companies that produce feed, molasses produced by sugar factories and intended for the production of brewer's yeast, or spent pomace produced by oil mills and used for fuel production.

All material which cannot be reused but must be disposed of is considered as waste from the food and beverage industry. Tomato skins and seeds, grape stalks, seeds and skins, fruit leaves, cores and stalks are mentioned by way of non-limiting example.

According to the method of the invention, by-products and waste from agricultural activity and food and beverage production industries are used as the starting biomass.

In the following explanatory example, by-products from the milling industry (wheatmeal, middlings, etc.), generally intended for animal feed, in a percentage ranging from 20% to 60% by weight on a dry basis of the starting biomass, by-products of the arable farming activity, such as legume grains unfit for human or animal consumption due to the presence of anti-nutritional factors (such as, for example, broad beans), in a percentage ranging from 5% to 30% by weight on a dry basis of the starting biomass, agricultural waste from the tree crop pruning activity (such as, for example, leaves and branches of olive trees), in a percentage ranging from 5% to 30% by weight on a dry basis of the starting biomass, and food and beverage industry waste (such as grape stalks, skins and seeds, etc. from the wine industry), in a percentage ranging from 5% to 30% by weight on a dry basis of the starting biomass, were used.

The Table 1 below shows the chemical composition of waste and by-products from both agricultural activity and the production activity of industries that produce food and beverages.

**Table 1**

| | **Agricultural activity waste** | **Food industry waste** | **Agricultural activity by-product** | **Food industry by-product** | |
|---|---|---|---|---|---|
| | (olive pruning material) | (grape seeds, skins and stalks) | (broad beans) | (wheatmeal) | (middlings) |
| *Moisture %* | 7.898±0.06 | 15.06+0.13 | 11.35±0.04 | 12.58±0.03 | 15.96±0.1 |
| ***Ash* (%) *on dry matter*** | 7.12±0.04 | 5.20+0.02 | 4.72±0.11 | 5.20±0.04 | 4.40±0.02 |
| ***Lipids (%) on dry matter*** | 2.94±0.02 | **7.69+0.10** | 1.65±0.008 | 5.21±0.03 | 1.21±0.01 |
| ***Proteins (%) on dry matter*** | 9.12±0.19 | 8.50+0.46 | **31.4±1.83** | 19.19±0.22 | 14.99±1.82 |
| ***Fibers (%) on dry matter*** | **20.05±0.07** | 15.72+0.10 | 10.63±0.63 | 8.34±0.08 | 0.00 |
| ***Carbohydrates (%) on dry matter*** | 52.87±0.33 | 47.84+1.35 | 40.23±0.67 | 49.49±2.14 | **63.45±3.01** |

These chemical analyses have shown that the agricultural activity waste is characterized by a high content of insoluble plant fibers, also commonly referred to as raw plant fibers, which is ≅ 20% by weight, compared to the other matrices considered.

The term "insoluble plant fibers", as used herein, refers to fibers of plant origin which are not capable of dissolving in water and are not digestible by humans. They mainly include cellulose, hemicelluloses, lignin, cutin and suberin, and are contained in the plant cell wall to which they give stiffness and resistance.

By contrast, the waste from the food industry is characterized by a higher percentage of lipid fraction (≅ 7.69% by weight), i.e., ether extract (triglycerides, phospholipids, waxes, and sterols).

The term "ether extract", as used herein, refers to the lipid fraction which is soluble in ethyl ether or hexane and present in a solid or semi-solid material, as determined by the Soxhlet procedure (AOAC, 1990. Official Methods of Analysis. Vol. I. 15th ed. Association of Official Analytical Chemists, Arlington, VA, USA). The fat-soluble components of an ether extract typically include triglycerides, fatty acids, phospholipids, and waxes.

According to the invention, the agricultural and/or food by-products and waste used as the starting material contain insoluble plant fibers in a total amount comprised between 5% and 50% by weight on the total weight of the starting biomass, and the ether extract content of the starting biomass is comprised between 1% and 10% by weight on the total weight of said biomass.

The above percentages by weight refer to the total weight of the agricultural and/or food by-products and waste used as the starting material.

In addition, by-products from agricultural activity may have a high protein content (≅31.4% by weight) and/or a high carbohydrate content if they come from the food industry (≅63.45% by weight).

In one embodiment of the method according to the invention, the protein content of the starting biomass is in a total amount comprised between 15% and 30% by weight on the total weight of the biomass and/or the carbohydrate content of the starting biomass is in a total amount comprised between 30% and 60% by weight on the total weight of the biomass.

The combination of different percentages of these organic matrices (having different chemical compositions) in the technological process of the present invention allows containers and packaging having different mechanical properties in terms of plasticity, flexibility, and stiffness to be obtained.

The existing correlation between the dosage of the different ingredients and the mechanical properties of the manufactured objects is shown in the application examples of the invention for purely demonstrative and non-limiting purposes.

The method according to the invention advantageously allows the mechanical properties of the container or packaging articles obtainable with this method to be modulated on the basis of the composition of the starting material, in particular, the insoluble plant fiber content and the lipid fraction content in the agricultural and/or food by-products and waste used, and optionally also on the basis of the protein and/or carbohydrate content of the starting material, allowing for targeted implementation based on the particular end-use.

According to one embodiment of the present invention, in the starting biomass the insoluble plant fiber content in the agricultural waste is in a total amount comprised between 10% and 30% by weight on the total weight of said agricultural waste, the ether extract content in the food industry waste is in a total amount comprised between 5% and 15% by weight on the total weight of said food industry waste, the protein content in the farming activity by-products is in a total amount greater than or equal to 20% by weight on the total weight of said farming activity by-products, and/or the carbohydrate content in the food industry by-products is in a total amount comprised between 40% and 80% by weight on the total weight of said food industry by-products.

The method of the invention is essentially based on a step (i) of mixing the biomass used as the starting material with a plasticizer, followed by a step (ii) of hydrothermal treatment of the mixture until a plastic mass is obtained and a step (iii) of molding the plastic mass thus obtained into a predetermined shape by thermoforming.

Within the scope of the present description, the term "plastic mass" refers to a material characterized by the property of being moldable under the action of heat and/or pressure.

The present method may optionally comprise, prior to the mixing step (i), the step of subjecting the biomass of agricultural and/or food by-products and waste to drying, with the consequent generation of water vapor. Said drying step is preferably carried out when the biomass of agricultural and/or food by-products and waste has a moisture content of more than 20% by weight.

Preferably, the drying step is carried out at a temperature comprised between 100°C and 130°C and for a period of time comprised between 1 and 8 hours.

Advantageously, in this embodiment the water vapor generated by the biomass drying step is used in the next step (ii) of hydrothermal treatment, allowing significant water and energy savings.

According to the invention, the biomass of agricultural and/or food by-products and waste used in the method of the invention is characterized by a particle size smaller than or equal to 600 microns.

The term "particle size", as used herein, refers to the size distribution of the particles that make up the starting biomass. Methods suitable for analysing the particle size of a material are known and described in the state of the art, therefore the selection and use thereof are well within the skills of those of ordinary skill in the art.

Therefore, another advantage of the present invention is that the starting material used in the method can also be coarse in size, without the need for further steps to control the particle size.

Optionally, agricultural and/or food by-products and waste with a particle size greater than 600 microns may be subjected to a pulverization process in order to reach the particle size suitable for the method of the invention, preferably by treatment with a blade cutter.

The selection of the most suitable ways of reducing the particle size of the starting material for use within the scope of the present invention falls well within the skills of those of ordinary skill in the art.

In the method according to the invention, the mixing step (i) also comprises the use of a plasticizer, preferably a polyol.

In the context of the present invention, the most preferred polyol is diglycerol.

Advantageously, such a plasticizer, which is biodegradable and non-toxic, ensures enhanced mechanical characteristics, in particular, better flexibility and impermeability of the container or packaging articles produced according to the invention, due to its hygroscopicity.

In one embodiment, the plasticizer, preferably diglycerol, is present in the mixture in a total amount comprised between 2% and 15% by weight on the total weight of the mixture, preferably between 2% and 10% by weight.

The hydrothermal treatment step (ii) is characterized by special operating conditions, relating to temperature and time, which make it advantageously possible to obtain a plastic mass easily moldable into a specific shape from the starting material.

According to the present invention, the hydrothermal treatment step is based on the alternation of a vaporization step (a) and a rest step (b). This treatment results in the modification of the fibrous, lipid, starch and protein components of the mixture due to the increase in temperature and the hydration thereof. During this treatment, chemical reactions and interactions develop such that the heterogeneous starting matrix is transformed into a solid plastic mass suitable for the subsequent dehydration and forming step, said mass being characterized by a stiffness value (i.e., the force required to deform the product) lower than 390 Newtons (N) and an elasticity value lower than 1.8 mm (i.e., the thickness the material regains once the compressive action of the probe is ended).

In the context of the present description, the term "stiffness value" refers to the force required to deform the plastic mass, i.e., the reaction force of this mass to the compressive action of the probe. This value is expressed in Newtons (N).

The term "elasticity value" is understood herein to refer to the regain of the thickness or height of the sample (specimen) at the end of the pressing action. As this value relates to the size of the length, it is measured and expressed in millimeters (mm).

The thermoforming step gives the produced objects different degrees of stiffness or flexibility depending on the percentages of waste and by-products present in the starting biomass.

The mixing step of the method of the invention and the subsequent hydrothermal treatment step are preferably carried out within a system consisting of a tank with a rotating device equipped with a gap in which the water vapor flows, the latter being fed into the tank through holes in the outer wall of the mixing member.

In one embodiment of the method according to the invention, the mixing was performed at a constant speed of 200 rpm, but, depending on the size and power of the plant, speeds comprised between 50 and 300 rpm can also be used. For the hydrothermal treatment, vapor at 100°C at a pressure ranging from 1 to 4 bars was used in step (a). The temperature of the treated mixture must never be below 40°C and above 60°C during the rest step (b) and must never be below 61°C and above 90°C during the step (a) of vapor treatment while stirring.

The vapor treatment may range from 1 to 30 minutes, depending on the flow rate of the treated material mass and the vapor pressure used, whereas the rest steps must last at least 1 minute and at most 5 minutes.

During the hydrothermal treatment, steps (a) and (b) may be sequentially repeated for a predetermined number of times, preferably between 2 and 6 times, more preferably 3 times.

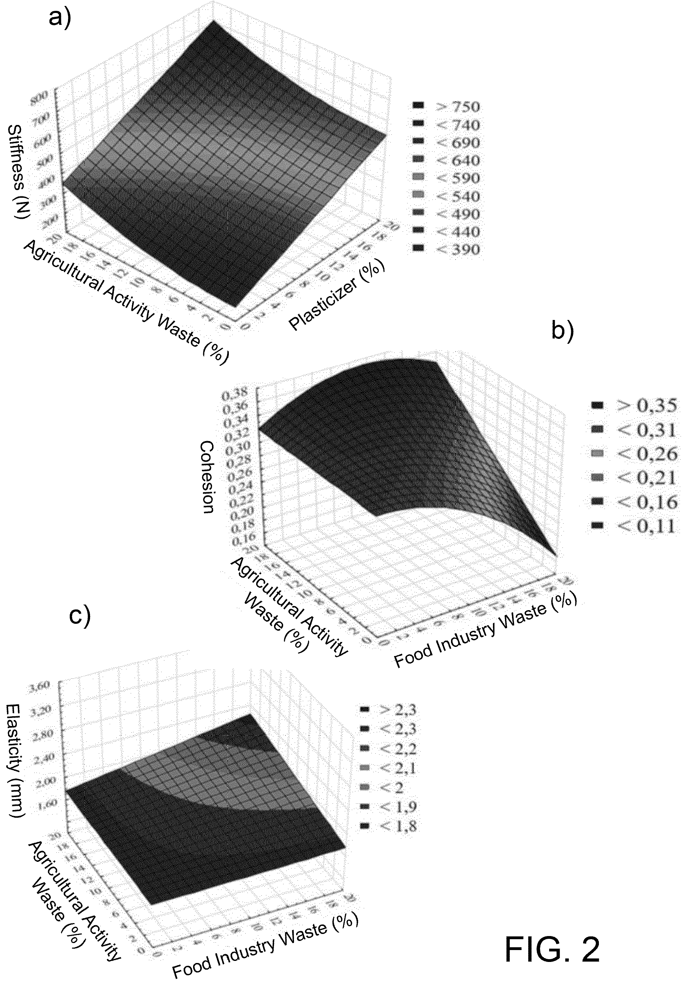

Figure 2 shows the results relating to the mechanical properties (hardness, cohesion and elasticity) of the mass produced by the hydrothermal treatment, which is ready to be subjected to the forming step, obtained by using different compositions of the starting biomass. In particular, the data shown in Figure 2 were obtained using a factorial design with 3 variables (% agricultural activity waste, % food industry waste and % plasticizer) with 3 levels of variation: plasticiser (10%, 15% and 20%); agricultural waste (0%, 10% and 20%) and food industry waste (0%, 10%, 20%). The percentage of agricultural by-products in the starting biomass was kept fixed at 10%. This percentage was chosen after carrying out preliminary tests showing that 10% of the agricultural by-product is the optimum value for the formation of a compact and cohesive mass (cohesion is intended to mean the resistance of the material to a second deformation after it has been subjected to the first compression and is calculated as the ratio between the two areas referring to the two compression peaks in a graph showing the applied force (Newtons) as a function of time (minutes), therefore the value is dimensionless), due to the protein component. However, percentages ranging from 5% to 15% can be used. The percentage of by-product from the food industry (rich in carbohydrates) ranged from a minimum of 50% to a maximum of 90%. The variation in the percentages of waste and by-products from agriculture and the food industry was made in such a way that their sum was always equal to 100%. These matrices, in fact, represented the solid part of the starting mixture subjected to the hydrothermal treatment. Therefore, if the percentages of the agricultural and food industry waste, for example, were 10% and 20%, respectively, the percentage of the agricultural by-product was 10% and that of the food industry by-product had to be 60% to obtain a sum of 100%. Similarly, if the agricultural and food industry waste, for example, were 20% each, the agricultural by-product was again 10%, whereas the food-industry by-product was 50%.

From the iso-response surfaces shown in Figure 2, it is possible to observe the statistically significant effect of the percentage of plasticizer, agricultural waste (the component with the highest content of insoluble plant fibers) and food industry waste (the component with the highest content of lipids) on the mechanical properties of the material intended for molding. In particular, the material was found to be less rigid and thus easily moldable and plastic (stiffness <390 N) if it was produced with percentages less than 10% of the plasticizer and agricultural waste (Figure 2a). The interaction of the fibers with the plasticizer, as their percentage increases, results in the formation of a rigid structure that gives stiffness to the mass before the molding step. The material produced by the hydrothermal treatment is more cohesive (> 0.35) and therefore tends not to break up during the molding operation, if the agricultural waste is added at the maximum percentage (20%), while that resulting from the food industry and the plasticizer must be present at 10%, that is, the lowest percentage of the plasticizer and the intermediate percentage of the food industry waste (Figure 2b). Figure 2c shows that the elasticity, i.e., the ability of the material to regain its shape after the molding operation, was found to be lower (< 2 mm) in prototypes made with percentages of plasticizer and of agricultural and food industry waste of less than 15% and 10%, respectively.

As indicated above, in the method of the invention, after the hydrothermal treatment step (ii), the plastic mass undergoes thermoforming so that said mass takes a predetermined shape. Thermoforming also involves the reduction of the moisture content of said mass to a value lower than 15% and the reduction of the water activity (a_{w}) of said mass, expressed as the ratio between the vapor pressure of water in the mass and the vapor pressure of pure water at the same temperature, to a value lower than 0.6, thereby advantageously allowing the microbiological stability of said plastic mass to be increased.

In a preferred embodiment, the thermoforming step (iii) comprises the steps of (c) positioning the plastic mass into the cavity of a mold having a temperature comprised between 60°C and 90°C, (d) applying a pneumatically expandable counter-mold to said mass positioned in the mold; (e) blowing compressed air at a temperature comprised between 60°C and 90°C into the counter-mold so as to compress the mass against the walls of said cavity until said mass takes a predetermined shape; and (f) separating the mold from the counter-mold and removing the article obtained in the previous step.

Preferably, the above mold is made of metallic material, more preferably aluminium or glass fiber-based composite materials.

Preferably, the pneumatically expandable counter-mold used in the thermoforming step is made of rubber, in particular biodegradable rubber, e.g., latex, thus being suitable to withstand a temperature comprised between 80 and 120°C and the pressure produced by the blowing.

Preferably, in the thermoforming step, the compressed air is blown into the counter-mold at a pressure comprised between 1 and 4 bar.

The thermoforming step as previously defined advantageously has a wide range of potential applications, allowing the plastic mass obtained in step (i) to be molded into container and packaging articles of different shapes and sizes by changing said mold and counter-mold.

Furthermore, this thermoforming step ensures high microbiological and biological stabilization of the container or packaging articles obtained with the method of the invention, which is suitable for the storage of said articles under different storage conditions without undergoing changes.

In the light of the above, due to the characteristics of high biodegradability and compostability and the suitably modulable mechanical properties, the container or packaging articles produced by the method of the invention are particularly suitable for use in different contexts, for example for agricultural and nursery activities, in the food and distribution sectors.

Advantageously, after their use by authorized operators or end-users, these articles are suitable for disposal as compostable organic waste and can therefore be used again as compost and organic fertilizer for agricultural land, thus returning to the production cycle in a cyclical and continuous manner.

As will be explained in more detail in the following experimental section, the method of the present invention allows a container or packaging article to be obtained with a biodegradation percentage greater than or equal to 97%, as measured under aerobic conditions at the end of a 180-day period.

Non-limiting examples of container or packaging articles that can be obtained with the method according to the invention include containers suitable for food packaging, such as trays for packaging fruit and vegetables, meat, fish, egg boxes, supports for pastry trays, biscuit or tea bag boxes, containers suitable for use in agronomic practices, e.g., single or multiple plant pots.

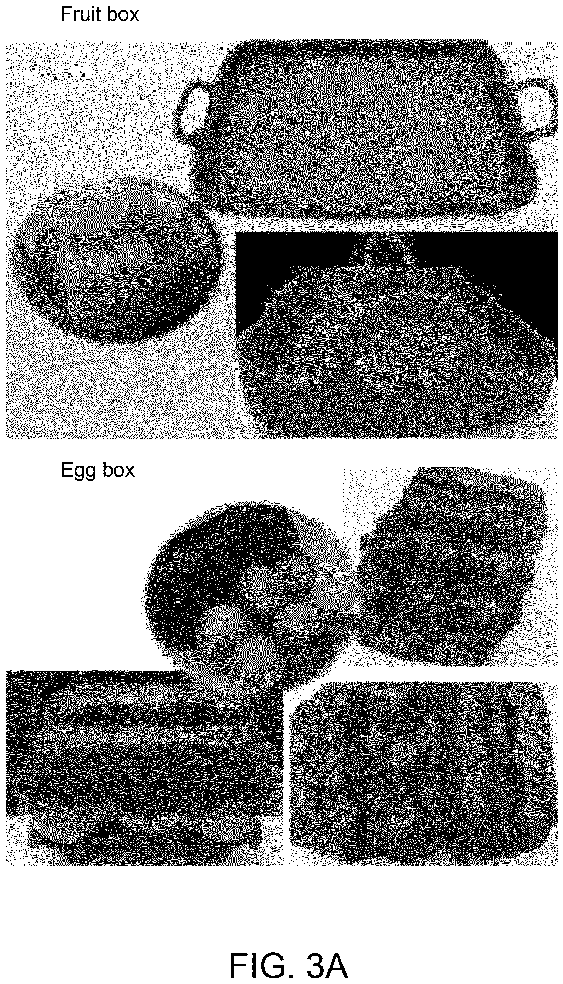

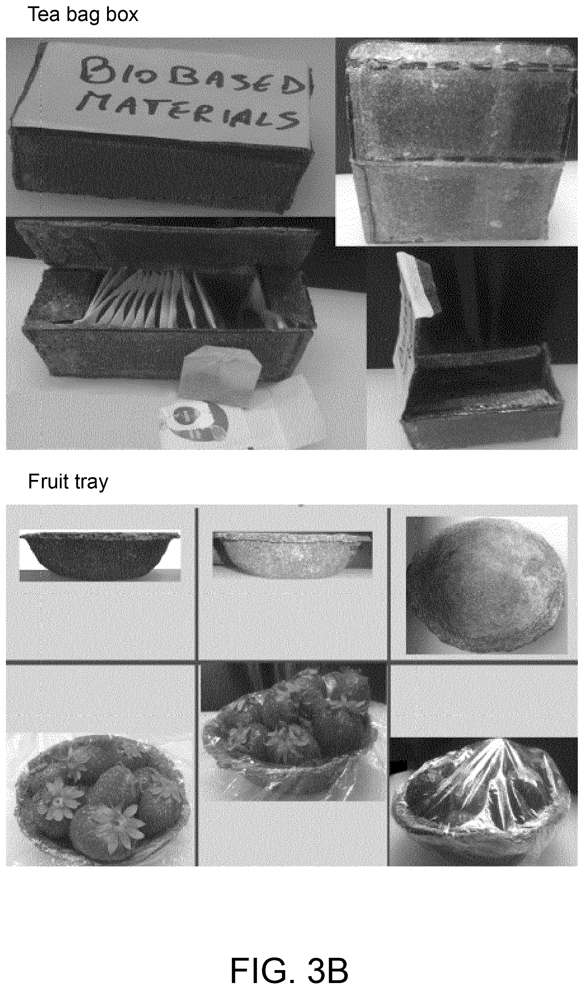

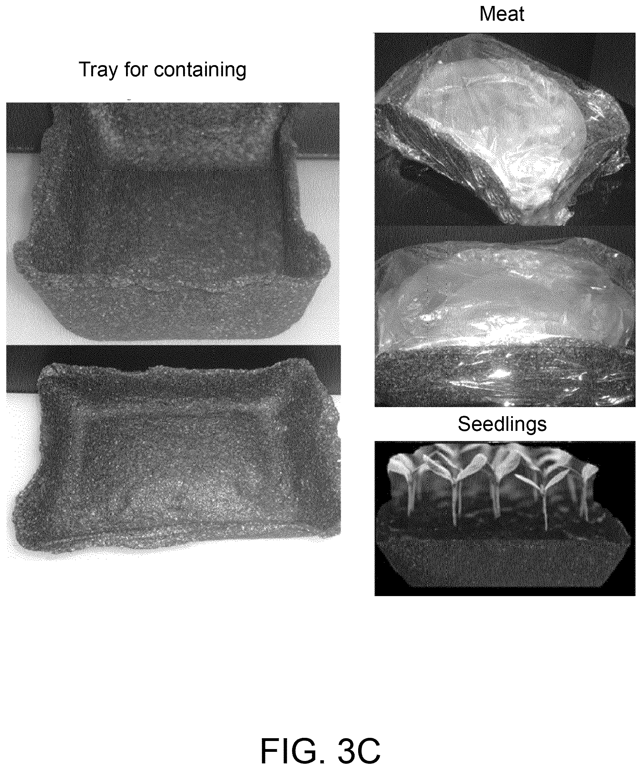

Figures 3A, B and C show a few container or packaging articles obtained by the method according to the invention.

The invention is further described in the examples below, with reference to the attached figures.

### 1. Method for the production of a biodegradable and compostable container or packaging article according to the invention

A biomass consisting of by-products from the food industry, i.e., those from the milling industry (wheatmeal, and middlings) in a percentage ranging from 50 to 90%, waste from the food industry, i.e., that from the wine industry (grape stalks, skins and seeds) in a percentage ranging from 0 to 20% by weight, by-products of the arable farming activity such as legume grains, for example broad beans, in a preferred percentage of 10%, but the same could be varied over a range comprised between 5 and 15% by weight, and agricultural waste from the tree crop pruning activity, in particular olive leaves and branches, in a percentage ranging from 0 to 20% by weight, were used as the starting material in the application example reported herein. The above percentages by weight refer to the total weight of the biomass of agricultural and/or food by-products and waste used as the starting material on a dry basis.

Agricultural and/or food by-products and waste with a particle size greater than 600 microns were pulverized by treatment with a blade cutter. The agricultural and/or food by-products and waste were optionally subjected to a drying procedure when they contained a moisture content greater than 15%. Subsequently, the biomass of agricultural and/or food by-products and waste, which had optionally been subjected to the treatments as described above, was mixed with a plasticizer. The plasticizer was added in a total amount comprised between 0% and 20% by weight on the total weight of the mixture on a dry basis, in order to enhance the mechanical and waterproof properties of the finished articles obtained by the method of the invention. It is a non-toxic, biodegradable and compostable substance. Diglycerol was preferably used as the plasticizer because, compared to simple glycerol and other polyols, it gives significantly greater flexibility and waterproof properties.

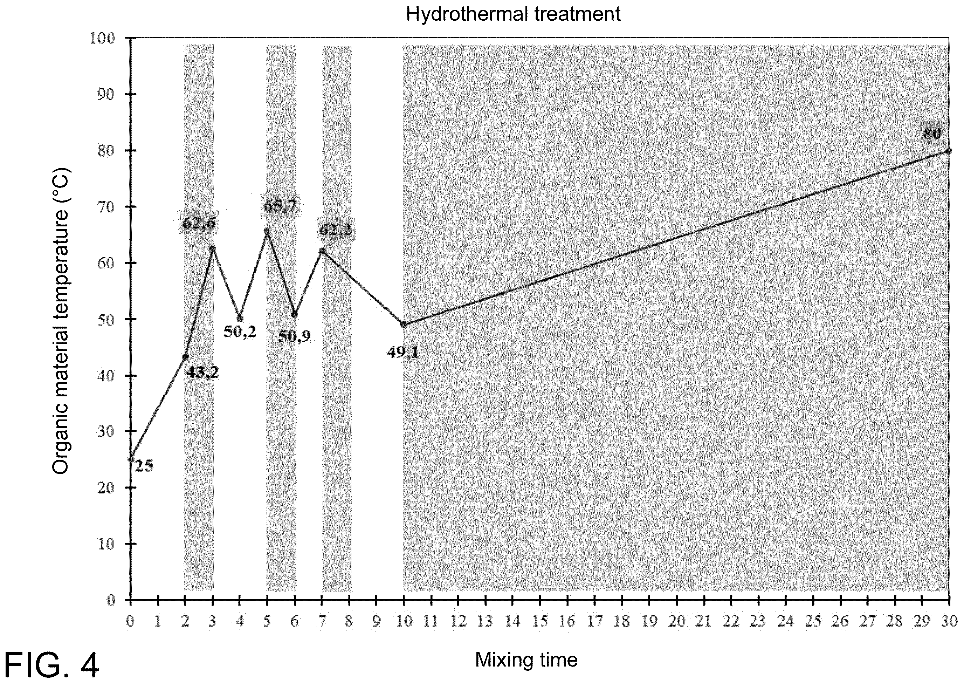

The next step consists of a hydrothermal treatment with vapor combined with a mixing action. The treatment consists of alternating steps which involve introducing and stopping the vaporization into the biomass chamber where the mass is kept continuously stirring (mixing) at 200 rpm. The hydrothermal treatment is shown in the graph in Figure 4, which shows the temperatures detected during the technological treatment as a function of time, both in the vaporization steps and in the vapor stopping "rest" steps. This treatment involves a total time of 30 minutes, consisting of 1 minute repeated three times of vaporization alternating with 3 "rest" steps lasting 2 minutes. The final step is a 20-minute vaporization treatment. With regard to the temperatures reached by the stirring biomass, ranges of 40 - 65°C in the first 10 minutes and 80°C after 20 minutes of continuous vapor treatment were detected. The vapor had a pressure of 3 bar, but these values can range from 1 to 4 bar depending on the mass flow rate, and the capacity and size of the plant. The mixing was carried out with a system consisting of a tank with a rotating device equipped with a gap in which water vapor flows, the latter being fed into the tank through holes in the outer wall of the mixing member. Again, with a view to saving a valuable and non-renewable resource such as water, the vapor was generated partially or totally by recovering that generated by the water evaporating from the plant material subjected to drying and by recovery from the condensates resulting from the subsequent material drying and forming steps.

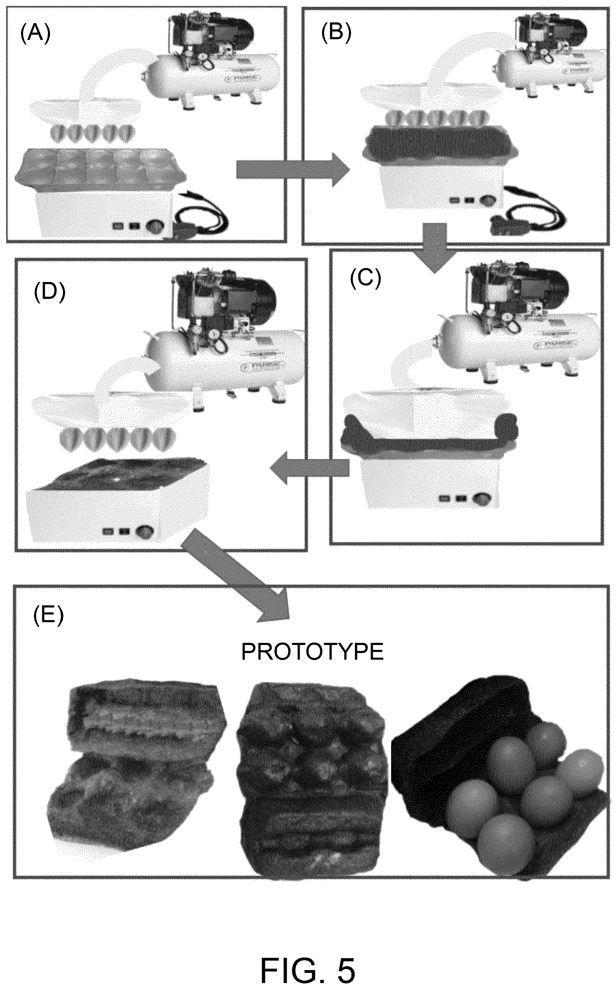

After the hydrothermal treatment step, the plastic and deformable solid mass thus obtained, having stiffness and elasticity values below 200 N and 1.6 mm, respectively, was subjected to thermoforming using an innovative system suitable for this type of material, schematically illustrated in Figure 5. This system consists of a metal mold with a heating hood, an inflatable counter-mold, and a compressor (A). The steps of the operation concern the deposit and filling of the mold with innovative material (B); the descent of the counter-mold into the innovative material and the introduction of hot compressed air to form the object and dry the material by heating the metal mold and inflatable counter-mold (C) and, finally, the ascent, decompression of the counter-mold and extraction of the dried object (D). Figure 5E gives an example of the prototypes obtained by forming the biomass processed according to the method described above. In particular, said system is equipped with a heating device on which molds of varying shape and size (depending on the object to be formed) can be mounted, and a pneumatically expandable counter-mold made of latex or other biodegradable rubber material resistant to the heating and the pressure exerted by the blowing action.

The pneumatically expandable counter-mold was immersed in the plastic mass previously arranged inside the cavity of a mold at a temperature comprised between 60 and 90°C, and subsequently hot compressed air was blown inside the counter-mold at a temperature comprised between 60 and 90°C, with a pressure comprised between 1 and 4 atm, causing the swelling thereof, which makes the plastic mass take a specific shape depending on how the counter-mold was designed and shaped. The soft pressing of the plastic mass deposited in the mold and the subsequent heating, before the mold and counter-mold were separated, allowed an object to be obtained with the desired shape and ready for use, in some cases after finishing the edges to remove excess material. The thickness of the walls of the container or packaging article according to the invention was adjusted according to the pressure exerted by the compressed air introduced into the expandable counter-mold, on which the distance between the mold and the counter-mold depends.

### 2. Characterization of the container or packaging articles manufactured with the method according to the invention

### Properties of the products after forming and dehydration

In order to facilitate the molding step, the objects and packaging made according to the procedure described above were manufactured by considering three formulations which differed in the percentage of waste from the agricultural and food industry activity (0%; 7.5% and 15%) and in the percentage of by-product from the food industry (60%; 75% and 90%), while the content of the by-product from the agricultural activity and the plasticizer were kept constant at a percentage of 10% and 15%, respectively. These different formulations were chosen taking into account the best conditions for forming and molding the thermo-treated biomass (percentage of agricultural and food industry waste less than 15%, percentage of plasticizer 5%, see Figure 2). The mechanical properties, such as flexibility expressed in mm and stiffness expressed in N, were determined on the objects obtained. In addition, the values for the water activity (a_{w}) and moisture content (%) of the material after forming/dehydration were assessed.

The bending strength is defined as the ability of a material to resist deformation under a load. Therefore, a flexible material can bend and thus deform without breaking. The values for the flexibility of the materials being tested were expressed in millimeters, i.e., the radius of curvature of the material being bended, using a dynamometric probe before the material was broken.

Stiffness is the ability of a body to oppose plastic deformation caused by an applied force. Its opposite is called flexibility. Within the scope of the present description, stiffness is expressed in Newtons (N), i.e., the force that the dynamometric probe must exert on the material to cause it to break during the bending test.

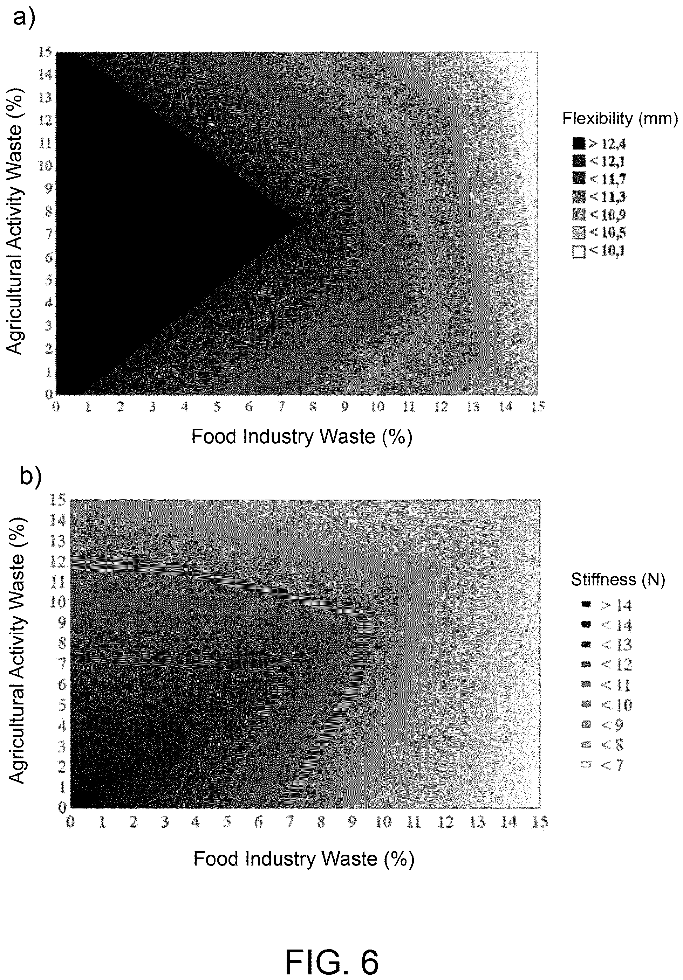

Figure 6 shows the results relating to the flexibility and stiffness of prototypes obtained with different compositions of the starting biomass. The results show that, in order to obtain flexible and bend-resistant containers, thus preventing their breakage in the event of handling, it is advisable to use food industry waste in amounts of less than 7%, while agricultural waste can also be used up to the maximum percentage (20%). The waste from agricultural activity, in fact, due to the greater content of cellulosic fibers, is capable of giving the formed and dehydrated object a homogeneous, compact, and flexible, though strong and tenacious, structure.

The increase in waste from the food industry, due to the increased presence of the lipid component, leads, if added in percentages greater than 7%, to obtaining a less flexible, rigid and more fragile object, which is prone to easy breakage even if subjected to not very high loading forces. The presence of this major lipid component, by affecting the glass transition temperature of the material after drying, causes the object obtained to be in a vitreous state and therefore fragile, poorly flexible and resistant.

Therefore, the method according to the invention advantageously allows the desired mechanical properties of the finished container or packaging article to be modulated by suitably varying, in the starting material, the percentage content of the by-products used which are different in nature and in chemical composition.

In order to verify that the step of drying the article had generated a stable compound not subject to microbial proliferation, the water activity (a_{w}) and % moisture content were determined in the articles obtained with different compositions of the starting biomass. The results obtained showed that all samples had similar values of a_{w} (mean value 0.28 ± 0.06) and percent moisture (mean value 4.09 ± 0.93). These data show that the objects produced cannot undergo microbial alteration because they have a_{w} values of less than 0.6 and a moisture content of less than 15% (values below which micro-organisms, molds and yeasts are unable to develop).

### Biodegradability and compostability

In addition, the container or packaging article produced according to the process of the invention was tested to assess the biodegradability and compostability thereof.

The results of these tests are given in Table 2 below together with the reference values given in Legislative Decree 75/2010 and UNI EN ISO 13432:2002. UNI EN ISO 13432 is a technical standard setting out the "Requirements for packaging recoverable through composting and biodegradation - Test scheme and evaluation criteria for the final acceptance of packaging" and defines the criteria relating to the definition of the characteristics that a material must possess in order to be defined as biodegradable or compostable. The term "compostable" refers to standards related to the non-toxicity of the decomposed material if dispersed in nature. Annex 2 of Legislative Decree No 75 of 2010 sets out the requirements that a material must have in order to be used as a "soil amender", in order to preserve or enhance the physical or chemical characteristics or the biological activity of the soil.

The data obtained show that the container or packaging article produced is totally biodegradable. In fact, according to the EN 13432 and EN 14995 standards, a material is defined as biodegradable if it degrades by at least 90% within 6 months (180 days) in an aerobic environment. The biodegradability, i.e., the ability of the container or packaging article produced by the method of the invention to decompose in nature, was determined by laboratory tests in an aerobic environment in the presence of mature compost, by assessing the mineralization of said article to carbon dioxide and water by micro-organisms at the end of the six months.

The tests carried out on an average of 5 samples showed that the container or packaging article has a biodegradability percentage of 97,72±0.4 %. Therefore, it falls fully within the definition of biodegradable packaging material. Moreover, the tests carried out also show that this material falls fully within the limits set by both the UNI EN ISO 13432:2002 standard and those of Legislative Decree No 75/2010, hence it is compostable and thus usable as a biological fertilizer in the final stage of its life cycle.

**Table 2**

| | *Mean values* | *St. Dev.* | *Limits according to Legislative Decree 75*/*2010* | *Limits set by UNI EN ISO 13432:2002* |
|---|---|---|---|---|
| *Biodegradability (%)* | 97.72 | 0.47 | *90* | *90* |
| *pH* | 5.64 | 0.10 | *6-8.5* | |
| *Moisture at 105 °C (%)* | *11.1* | 3.82 | *<50* | |
| *Total solids, total fixed solids-Residue 550 °C (%)* | 3.45 | 0.14 | - | |
| **Total Organic Carbon (%)* | 67 | 1.41 | ³ *20* | |
| **Total Nitrogen (as N) (%)* | 29.1 | 1.27 | | |
| *UN Ratio* | 23 | 0.5 | *25* | |
| **Organic nitrogen* | 26.8 | 0.56 | - | |
| *Organic N*/*total N ratio (%)* | 92.9 | 1.04 | ³ *80* | |
| **Plastic materials glass and* | 0.00 | 0.00 | *0.5* | *10* |
| **Lithoid inert materials* | 0.00 | 0.00 | *5* | |
| **Arsenic* | 0.06 | 0.01 | - | *5* |
| **Cadmium mg*/*kg* | 0.01 | 0.01 | *1*.*5* | *0.5* |
| **Hexavalent chromium* | <0.01 | 0.00 | *0.5* | *50* |
| **Mercury mg*/*kg* | <0.01 | 0.00 | 1.5 | *0.5* |
| **Nickel mg*/*kg* | <0.01 | 0.00 | *100* | *25* |
| **Lead mg*/*kg* | 0.08 | 0.01 | *140* | *50* |
| **Copper mg*/*kg* | <0.01 | 0.00 | *2.03* | *50* |
| **Selenium mg*/*kg* | 0.09 | 0.01 | - | *0.75* |
| **Zinc mg*/*kg* | <0.01 | 0.00 | *11.87* | *150* |
| *Salmonella* | Absent/25 g | | *Absent*/*25 g* | |
| *Escherichia coli* | 0.00 | 0.00 | *0* | |
| *Static Respiration Index (as O2)* | 170 | 7.07 | *200* | |
| *Germination Index* | 97 | 2.83 | *> 60* | ³ *90* |
| *Nitrogen Mineralization Index* | 2.1 | 0.14 | *3.5* | |
| *Aerobic composting* | *0* | | | *<10* |

### 3. Shelf life of the container or packaging articles manufactured with the method according to the invention

In order to assess any variations in mechanical properties caused by moisture absorption during storage of the articles made by the method of the invention and in the shape of a tray (height 4 cm, length 10.5 cm and width 8 cm), shelf life tests were performed. Storage was carried out by keeping the objects free of any covering, at room temperature (20°C -24°C), + 4°C (under refrigeration), and -20°C (frozen) for 60 days.

During this period, some of the stored objects were taken at intervals of 8, 30 and 60 days and tested for the thickness of the wall of the tray, the % moisture content, and the a_{w} values in order to monitor any swelling of the material due to the absorption of moisture from the surrounding air. In addition, the flexibility and stiffness values of the trays were measured to monitor for any changes in the mechanical properties during the shelf life.

After storage, the material stored under refrigeration (+ 4°C) and frozen was left at room temperature (without any covering) for 24 hours and only then was tested.

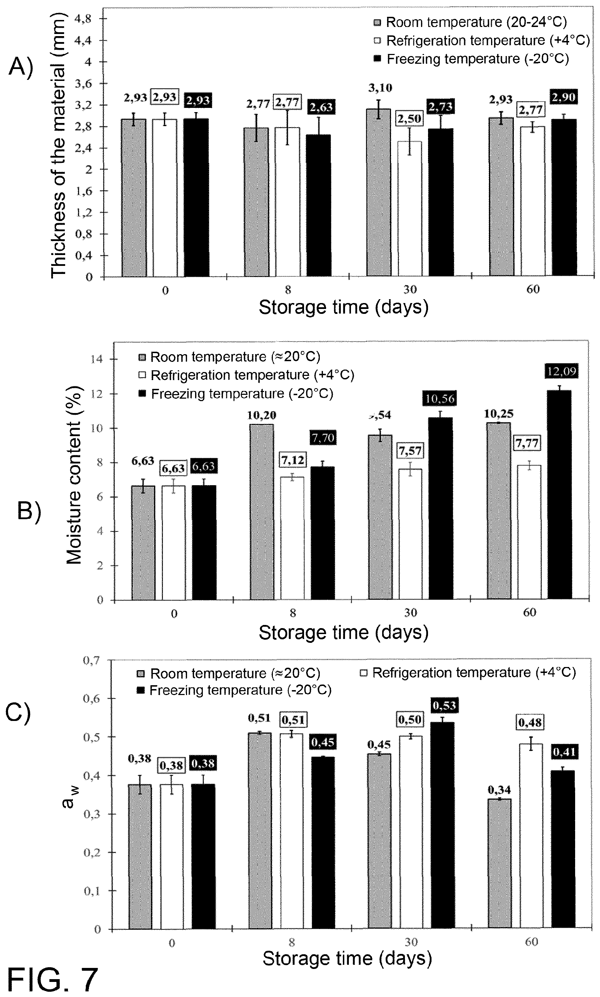

Figure 7 shows the values for wall thickness (a), % moisture content (b) and water activity (c) of the trays subjected to storage at different temperature conditions for 60 days.

The results relating to the variation in the thickness of the "trays" stored for 60 days at different temperatures show that there is no significant variation in both the time and the storage temperature (Figure 7a and Table 3a).

**Table 3a**

| ***Independent variables*** | ***Thickness (mm)*** | | ***Moisture content (%)*** | | **a_{w}** | |
|---|---|---|---|---|---|---|
| | ***F*** | ***p*** | ***F*** | ***p*** | ***F*** | ***p*** |
| *Storage time* | 1.19 | 0.33 | 14.11 | 0.01 | 16.52 | 0.01* |
| *Storage temperature* | 2.42 | 0.10 | 11.48 | 0.01* | 4.05 | 0.02* |

| | | | | | | |
|---|---|---|---|---|---|---|
| **** Independent variables with significant effect (p < 0.05)*** | | | | | | |

This demonstrates that the aforementioned articles are not hygroscopic, in fact a significant but very small change in moisture was observed only after 60 days of storage, even though the final value was well below 15% (Figure 7b). Regarding the effect of the storage temperature on the increase in moisture in the artefact, a significantly different behaviour was found in objects stored under different thermal conditions (Table 3a). In particular, the trays stored at room temperature showed an increase in moisture (from 6.63 to 10.25 %) already after 8 days of storage, which remained almost unchanged after 60 days of storage (Figure 7b). The trays stored at + 4°C showed no significant change in moisture during the 60 days of storage, whereas the frozen ones showed an increase after 30 days of storage (Figure 7b). The water activity values (a_{w}), although they varied significantly during storage and in a different way depending on the storage temperature, showed not only a decrease after 60 days of storage (Figure 7b and Table 3a) but were also below 0.6 (critical limit above which fungal development is possible).

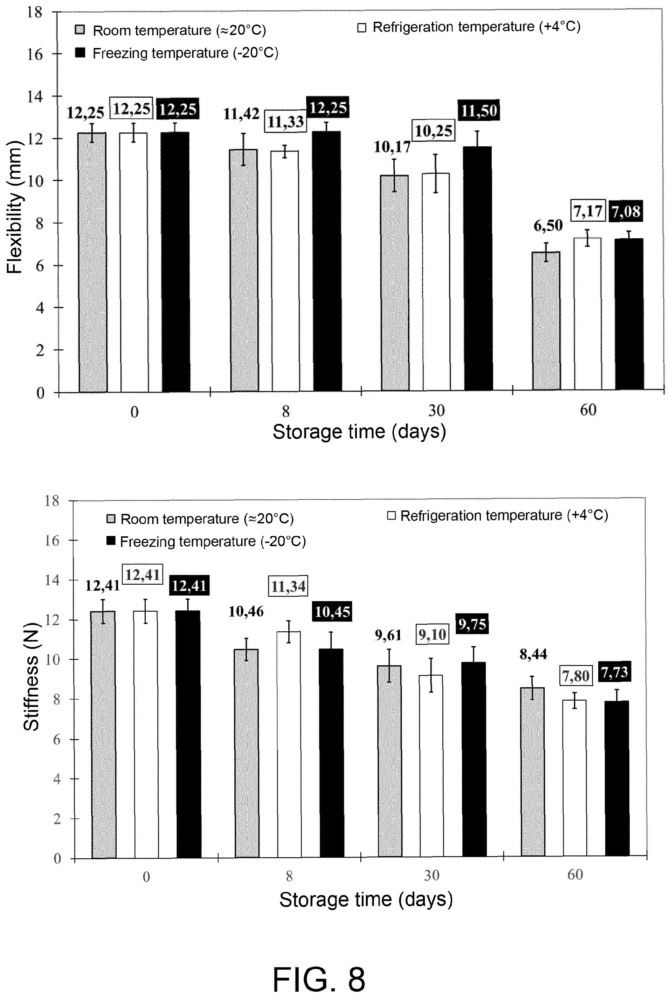

With regard to the mechanical properties, the results showed a significant but slight reduction in the flexibility and stiffness of the trays at the end of the storage step, regardless of the temperature at which the articles were stored (Figure 8 and Table 3b).

**Table 3b**

| ***Independent variables*** | ***Flexibility (mm)*** | | ***Stiffness (N)*** | |
|---|---|---|---|---|
| | ***F*** | ***p*** | ***F*** | ***p*** |
| *Storage time* | 148.49 | 0.01* | 55.56 | 0.01* |
| *Storage temperature* | 5.06 | 0.01* | 0.02 | 0.98 |

| | | | | |
|---|---|---|---|---|
| ****Independent variables with significant effect (p < 0.05)*** | | | | |

In the light of the above, the material appeared to be poorly hygroscopic and therefore quite waterproof as during storage at different storage temperatures it absorbs water slowly. This is a very important feature that distinguishes the container or packaging articles produced by the method according to the invention from those made from paper and cardboard which are very hygroscopic, except those which have undergone special nanotechnology-based waterproofing treatments, which certainly lead to an increase in production costs.

Therefore, these results show that the container or packaging articles obtained with the method of the invention can also be advantageously used under storage conditions where the temperature is a few degrees higher or lower than zero degrees centigrade, i.e., they can be suitable for packaging refrigerated or frozen products.

## Claims

1. A method of producing a biodegradable and compostable container or packaging article, wherein the method only employs agricultural and/or food by-products and waste as the starting material and comprises the steps of:
(i) mixing a biomass of agricultural and/or food by-products and waste **characterized by** a particle size smaller than or equal to 600 microns with a plasticizer;
(ii) subjecting the mixture of step (i) to a hydrothermal treatment, wherein said treatment comprises the following steps in sequential order:
(a) stirring the mixture in the presence of water vapor at a pressure comprised between 1 and 4 bar, at a temperature comprised between 61°C and 90°C, and for a period of time comprised between 1 and 30 minutes; and
(b) cooling the stirred mixture to a temperature comprised between 40°C and 60°C, and keeping the mixture at said temperature for between 1 and 5 minutes until a plastic mass **characterized by** a stiffness value lower than 390 Newtons (N) and an elasticity value lower than 1.8 mm is obtained; and
(iii) subjecting the plastic mass of step (ii) to thermoforming, in such a way that the moisture content of said mass is reduced to a value lower than 15% and the water activity of said mass, expressed as the ratio between the vapor pressure of water in the mass and the vapor pressure of pure water at the same temperature, is reduced to a value lower than 0.6, and in such a way that said mass takes a predetermined shape;
wherein the agricultural and/or food by-products and waste used as the starting material contain insoluble plant fibers in a total amount comprised between 5% and 50% by weight on the total weight of the starting biomass, and ether extract content of the starting biomass is comprised between 1% and 10% by weight on the total weight of said biomass.

2. The method according to claim 1, wherein steps (a) and (b) of the hydrothermal treatment are sequentially repeated for a predetermined number of times.

3. The method according to claim 1 or 2, wherein the protein content of the starting biomass is in a total amount comprised between 15% and 30% by weight on the total weight of the biomass and/or the carbohydrate content of the starting biomass is in a total amount comprised between 30% and 60% by weight on the total weight of the biomass.

4. The method according to any of claims 1 to 3, wherein said thermoforming step comprises the steps of (c) positioning the plastic mass into the cavity of a mold having a temperature comprised between 60°C and 90°C, (d) applying a pneumatically expandable counter-mold to the mass positioned in the mold; (e) blowing compressed air at a temperature comprised between 60°C and 90°C into the counter-mold so as to compress the mass against the walls of said cavity until said mass takes a predetermined shape; and (f) separating the mold from the counter-mold and removing the article obtained in the previous step.

5. The method according to any of claims 1 to 4, wherein step (iii) is carried out in such a way to obtain a semi-finished product suitable for becoming a biodegradable and compostable container or packaging article.

6. The method according to any of claims 1 to 5, wherein prior to the mixing step (i), the biomass of agricultural and/or food by-products and waste undergoes a drying step with the generation of water vapor, the water vapor thus generated being subsequently used in the next step (ii) of hydrothermal treatment.

7. The method according to any of claims 1 to 6, wherein the starting material is selected from the group consisting of by-products of the milling industry, by-products of the arable farming activity, agricultural waste from the tree crop pruning activity, food industry waste, and any combination thereof.

8. The method according to claim 7 wherein, in the starting material, the by-products of the milling industry are present in a total amount comprised between 60% and 90% by weight on the total weight of the starting biomass, the by-products of the arable farming activity are present in a total amount comprised between 5% and 15% by weight on the total weight of the starting biomass, the agricultural waste from the tree crop pruning activity is present in a total amount comprised between 5% and 20% by weight on the total weight of the starting biomass, and/or the food industry waste is present in a total amount comprised between 2% and 10% by weight on the total weight of the starting biomass.

9. The method according to claim 7 or 8, wherein the by-products of the milling industry are selected from wheatmeal, middlings, bran, fine bran, and groats; the by-products of the arable farming activity are selected from legume, cruciferous, and grass grains; the agricultural waste from the tree crop pruning activity is selected from leaves and branches of olive trees, grapevine, fruit trees, evergreen trees, and anti-smog trees; and/or the food industry waste is selected from stalks, skins, grape seeds, leaves, cores, seeds, petioles, stems, and tips.

10. The method according to any of claims 1 to 9, wherein, in the starting biomass, the insoluble plant fiber content in the agricultural waste is in a total amount comprised between 10% and 30% by weight on the total weight of said agricultural waste, the ether extract content in the food industry waste is in a total amount comprised between 5% and 15% by weight on the total weight of said food industry waste, the protein content in the farming activity by-products is in a total amount greater than or equal to 20% by weight on the total weight of said farming activity by-products, and/or the carbohydrate content in the food industry by-products is in a total amount comprised between 40% and 80% by weight on the total weight of said food industry by-products.

11. The method according to any of claims 1 to 10, wherein the plasticizer is diglycerol, and the plasticizer is preferably present in the mixture in a total amount comprised between 2% and 10% by weight on the total weight of the mixture.

## Patentansprüche

1. Verfahren zur Herstellung eines biologisch abbaubaren und kompostierbaren Behälters oder Verpackungsartikels, wobei das Verfahren ausschließlich landwirtschaftliche und/oder Lebensmittel-Nebenprodukte und -Abfälle als Ausgangsmaterial verwendet und die folgenden Schritte umfasst:
(i) Mischen einer Biomasse aus landwirtschaftlichen und/oder Lebensmittel-Nebenprodukten und -Abfällen, die durch eine Partikelgröße kleiner als oder gleich 600 Mikrometern gekennzeichnet ist, mit einem Weichmacher;
(ii) Unterziehen der Mischung aus Schritt (i) einer hydrothermalen Behandlung, wobei diese Behandlung die folgenden Schritte in Sequenz umfasst:
(a) Rühren der Mischung in Anwesenheit von Wasserdampf bei einem Druck zwischen 1 und 4 bar, bei einer Temperatur zwischen 61°C und 90°C und für eine Zeitdauer zwischen 1 und 30 Minuten; und
(b) Abkühlen der gerührten Mischung auf eine Temperatur zwischen 40°C und 60°C und Halten der Mischung bei dieser Temperatur für eine Zeitdauer zwischen 1 und 5 Minuten, bis eine plastische Masse erhalten wird, die durch einen Steifigkeitswert von weniger als 390 Newton (N) und einen Elastizitätswert von weniger als 1,8 mm gekennzeichnet ist; und
(iii) Unterziehen der plastischen Masse aus Schritt (ii) einer Thermoformung, so dass der Feuchtigkeitsgehalt dieser Masse auf einen Wert niedriger als 15 % reduziert wird und die Wasseraktivität dieser Masse, die als das Verhältnis zwischen dem Dampfdruck des Wassers in der Masse und dem Dampfdruck von reinem Wasser bei derselben Temperatur ausgedruckt wird, auf einen Wert unter 0,6 reduziert wird, und so dass diese Masse eine vorbestimmte Form annimmt;
wobei die landwirtschaftlichen und/oder Lebensmittel-Nebenprodukte und -Abfälle, die als Ausgangsmaterial verwendet werden, unlösliche Pflanzenfasern in einer Gesamtmenge zwischen 5 % und 50 % Gewichtsprozent bezogen auf das Gesamtgewicht der Ausgangsbiomasse enthalten und der Gehalt an Etherextrakt der Ausgangsbiomasse zwischen 1 % und 10 % Gewichtsprozent bezogen auf das Gesamtgewicht dieser Biomasse vorhanden ist.

2. Verfahren nach Anspruch 1, wobei die Schritte (a) und (b) der hydrothermalen Behandlung eine vorbestimmte Anzahl von Malen in Sequenz wiederholt werden.

3. Verfahren nach Anspruch 1 oder 2, wobei der Proteingehalt der Ausgangsbiomasse in einer Gesamtmenge zwischen 15 % und 30 % Gewichtsprozent bezogen auf das Gesamtgewicht der Biomasse vorhanden ist und/oder der Kohlenhydratgehalt der Ausgangsbiomasse in einer Gesamtmenge zwischen 30 % und 60 % Gewichtsprozent bezogen auf das Gesamtgewicht der Biomasse vorhanden ist.

4. Verfahren nach einem der Ansprüche 1 bis 3, wobei der Thermoformungsschritt die folgenden Schritte umfasst: (c) Positionieren der plastischen Masse in den Hohlraum einer Form aufweisend eine Temperatur zwischen 60°C und 90°C, (d) Anlegen einer pneumatisch expandierbaren Gegenform an die in der Form positionierte Masse; (e) Einblasen Druckluft mit einer Temperatur zwischen 60°C und 90°C in die Gegenform, um die Masse gegen die Wände des Hohlraums zu pressen, bis die Masse eine vorbestimmte Form annimmt; und (f) Trennen der Form von der Gegenform und Entfernen des Artikels, der in dem vorherigen Schritt erhalten wird.

5. Verfahren nach einem der Ansprüche 1 bis 4, wobei Schritt (iii) durchgeführt wird, sodass ein Halbfertigprodukt erhalten wird, das geeignet ist, einen biologisch abbaubaren und kompostierbarer Behälter oder Verpackungsartikel zu werden.

6. Verfahren nach einem der Ansprüche 1 bis 5, wobei die Biomasse aus landwirtschaftlichen und/oder Lebensmittel-Nebenprodukten und -Abfällen vor dem Mischungsschritt (i) einem Trocknungsschritt mit Erzeugung von Wasserdampf unterzogen wird, wobei der so erzeugte Wasserdampf anschließend in dem nächsten Schritt (ii) der hydrothermalen Behandlung verwendet wird.

7. Verfahren nach einem der Ansprüche 1 bis 6, wobei das Ausgangsmaterial aus der Gruppe bestehend aus Nebenprodukten der Mühlenindustrie, Nebenprodukten aus dem Ackerbau, landwirtschaftlichen Abfällen aus der Baumschnittaktivität, Abfällen der Lebensmittelindustrie und jede Kombination davon ausgewählt wird.

8. Verfahren nach Anspruch 7, wobei die Nebenprodukte der Mühlenindustrie, in dem Ausgangsmaterial, in einer Gesamtmenge zwischen 60 % und 90 % Gewichtsprozent bezogen auf das Gesamtgewicht der Ausgangsbiomasse vorhanden sind, die Nebenprodukte aus dem Ackerbau in einer Gesamtmenge zwischen 5 % und 15 % Gewichtsprozent bezogen auf das Gesamtgewicht der Ausgangsbiomasse vorhanden sind, die landwirtschaftlichen Abfälle aus der Baumschnittsaktivität in einer Gesamtmenge zwischen 5 % und 20 % Gewichtsprozent bezogen auf das Gesamtgewicht der Ausgangsbiomasse vorhanden sind und/oder die Abfälle der Lebensmittelindustrie in einer Gesamtmenge zwischen 2 % und 10 % Gewichtsprozent bezogen auf das Gesamtgewicht der Ausgangsbiomasse vorhanden sind.

9. Verfahren nach Anspruch 7 oder 8, wobei die Nebenprodukte der Mühlenindustrie aus Weizenmehl, Grieß, Kleie, feiner Kleie und Grütze ausgewählt werden; die Nebenprodukte aus dem Ackerbau aus Hülsenfrüchten, Kreuzblütlern und Grasgetreiden ausgewählt werden; die landwirtschaftlichen Abfälle aus der Baumschnittsaktivität aus Blättern und Zweigen von Olivenbäumen, Rebstöcken, Obstbäumen, immergrünen Bäumen und Anti-Smog-Bäumen ausgewählt werden; und/oder die Abfälle der Lebensmittelindustrie aus Stielen, Schalen, Traubenkernen, Blättern, Kerngehäusen, Samen, Früchtstangeln, Stängeln und Spitzen ausgewählt werden.

10. Verfahren nach einem der Ansprüche 1 bis 9, wobei der Gehalt an unlöslichen Pflanzenfasern in den landwirtschaftlichen Abfällen, in der Ausgangsbiomasse, in einer Gesamtmenge zwischen 10 % und 30 % Gewichtsprozent bezogen auf das Gesamtgewicht der landwirtschaftlichen Abfälle vorhanden ist, der Gehalt an Etherextrakt in den Abfällen der Lebensmittelindustrie in einer Gesamtmenge zwischen 5 % und 15 % Gewichtsprozent bezogen auf das Gesamtgewicht der Abfälle der Lebensmittelindustrie vorhanden ist, der Proteingehalt in den Nebenprodukten aus dem Ackerbau in einer Gesamtmenge höher als oder gleich 20 % Gewichtsprozent bezogen auf das Gesamtgewicht der Nebenprodukte aus dem Ackerbau vorhanden ist und/oder der Kohlenhydratgehalt in den Nebenprodukten der Lebensmittelindustrie in einer Gesamtmenge zwischen 40 % und 80 % Gewichtsprozent bezogen auf das Gesamtgewicht der Nebenprodukte der Lebensmittelindustrie vorhanden ist.

11. Verfahren nach einem der Ansprüche 1 bis 10, wobei der Weichmacher Diglycerin ist und der Weichmacher vorzugsweise in einer Gesamtmenge zwischen 2 % und 10 % Gewichtsprozent bezogen auf das Gesamtgewicht der Mischung in der Mischung vorhanden ist.

## Revendications

1. Procédé de production d'un récipient ou d'un article d'emballage biodégradable et compostable, ledit procédé utilisant uniquement des sous-produits et déchets agricoles et/ou alimentaires comme matériau de départ et comprenant les étapes suivantes :
(i) mélanger une biomasse de sous-produits et déchets agricoles et/ou alimentaires **caractérisée par** une taille de particules inférieure ou égale à 600 microns avec un plastifiant ;
(ii) soumettre le mélange de l'étape (i) à un traitement hydrothermal, ledit traitement comprenant les étapes suivantes dans l'ordre séquentiel :
(a) agiter le mélange en présence de vapeur d'eau à une pression comprise entre 1 et 4 bars, à une température comprise entre 61°C et 90°C, et pendant une durée comprise entre 1 et 30 minutes ; et
(b) refroidir le mélange agité à une température comprise entre 40°C et 60°C, et maintenir le mélange à ladite température pendant une durée comprise entre 1 et 5 minutes jusqu'à obtention d'une masse plastique **caractérisée par** une rigidité inférieure à 390 Newtons (N) et une élasticité inférieure à 1,8 mm ; et
(iii) soumettre la masse plastique de l'étape (ii) à un thermoformage, de sorte que la teneur en humidité de ladite masse soit réduite à une valeur inférieure à 15 %, et que l'activité de l'eau de ladite masse, exprimée comme le rapport entre la pression de vapeur de l'eau dans la masse et la pression de vapeur de l'eau pure à la même température, soit réduite à une valeur inférieure à 0,6, et de sorte que ladite masse prenne une forme prédéterminée ;
dans lequel les sous-produits et déchets agricoles et/ou alimentaires utilisés comme matériau de départ contiennent des fibres végétales insolubles dans une quantité totale comprise entre 5 % et 50 % en poids par rapport au poids total de la biomasse de départ, et la teneur en extrait éthéré de la biomasse de départ étant comprise entre 1 % et 10 % en poids par rapport au poids total de ladite biomasse.

2. Procédé selon la revendication 1, dans lequel les étapes (a) et (b) du traitement hydrothermal sont répétées séquentiellement un nombre prédéterminé de fois.

3. Procédé selon la revendication 1 ou 2, dans lequel la teneur en protéines de la biomasse de départ est comprise entre 15 % et 30 % en poids par rapport au poids total de la biomasse et/ou la teneur en glucides de la biomasse de départ est comprise entre 30% et 60% en poids par rapport au poids total de la biomasse.

4. Procédé selon l'une quelconque des revendications 1 à 3, dans lequel ladite étape de thermoformage comprend les étapes suivantes : (c) positionner la masse plastique dans la cavité d'un moule ayant une température comprise entre 60°C et 90°C, (d) appliquer un contre-moule expansible pneumatiquement à la masse positionnée dans le moule ; (e) souffler de l'air comprimé à une température comprise entre 60°C et 90°C dans le contre-moule de manière à comprimer la masse contre les parois de ladite cavité jusqu'à ce que ladite masse prenne une forme prédéterminée ; et (f) séparer le moule du contre-moule et retirer l'article obtenu à l'étape précédente.

5. Procédé selon l'une quelconque des revendications 1 à 4, dans lequel l'étape (iii) est réalisée de manière à obtenir un produit semi-fini adapté à devenir un récipient ou un article d'emballage biodégradable et compostable.

6. Procédé selon l'une quelconque des revendications 1 à 5, dans lequel, avant l'étape de mélange (i), la biomasse de sous-produits et déchets agricoles et/ou alimentaires subit une étape de séchage avec génération de vapeur d'eau, la vapeur d'eau ainsi générée étant ensuite utilisée dans l'étape suivante (ii) de traitement hydrothermal.

7. Procédé selon l'une quelconque des revendications 1 à 6, dans lequel le matériau de départ est choisi parmi le groupe constitué de sous-produits de l'industrie de la meunerie, sous-produits de l'activité agricole, déchets agricoles issus de la taille des cultures arboricoles, déchets de l'industrie alimentaire, et toute combinaison de ceux-ci.

8. Procédé selon la revendication 7, dans lequel, dans le matériau de départ, les sous-produits de l'industrie de la meunerie sont présents dans une quantité totale comprise entre 60 % et 90 % en poids par rapport au poids total de la biomasse de départ, les sous-produits de l'activité agricole sont présents dans une quantité totale comprise entre 5 % et 15 % en poids par rapport au poids total de la biomasse de départ, les déchets agricoles issus de la taille des cultures arboricoles sont présents dans une quantité totale comprise entre 5 % et 20 % en poids par rapport au poids total de la biomasse de départ, et/ou les déchets de l'industrie alimentaire sont présents dans une quantité totale comprise entre 2 % et 10 % en poids par rapport au poids total de la biomasse de départ.

9. Procédé selon la revendication 7 ou 8, dans lequel les sous-produits de l'industrie de la meunerie sont choisis parmi la farine de blé, les remoulages, le son, le son fin, et la semoule ; les sous-produits de l'activité agricole sont choisis parmi les grains de légumineuses, crucifères, et graminées ; les déchets agricoles issus de la taille des cultures arboricoles sont choisis parmi les feuilles et branches d'oliviers, de vignes, d'arbres fruitiers, d'arbres à feuillage persistant, et d'arbres anti-smog ; et/ou les déchets de l'industrie alimentaire sont choisis parmi les tiges, peaux, pépins de raisin, feuilles, trognons, graines, pétioles, tiges principales, et extrémités.

10. Procédé selon l'une quelconque des revendications 1 à 9, dans lequel, dans la biomasse de départ, la teneur en fibres végétales insolubles dans les déchets agricoles est comprise entre 10 % et 30 % en poids par rapport au poids total desdits déchets agricoles, la teneur en extrait éthéré dans les déchets de l'industrie alimentaire est comprise entre 5 % et 15 % en poids par rapport au poids total desdits déchets de l'industrie alimentaire, la teneur en protéines dans les sous-produits de l'activité agricole est supérieure ou égale à 20 % en poids par rapport au poids total desdits sous-produits de l'activité agricole, et/ou la teneur en glucides dans les sous-produits de l'industrie alimentaire est comprise entre 40 % et 80 % en poids par rapport au poids total desdits sous-produits de l'industrie alimentaire.

11. Procédé selon l'une quelconque des revendications 1 à 10, dans lequel le plastifiant est le diglycérol, et le plastifiant est de préférence présent dans le mélange dans une quantité totale comprise entre 2 % et 10 % en poids par rapport au poids total du mélange.
